# EUROPEAN PATENT APPLICATION

(11) **EP 2 003 888 A2**
(43) Date of publication of application: **17.12.2008**
(21) Application number: 08153593.2
(22) Date of filing: 28.03.2008
(51) Int. Cl.: H04N 5/775, H04N 7/16, H04N 5/445

(54) **Method for setting configurations according to external AV device or program information and display apparatus using the same**

(30) Priority: 14.06.2007 KR 20070058394
(71) Applicant: Samsung Electronics Co., Ltd., Suwon-si, Gyeonggi-do 442-742 (KR)
(72) Inventor: Park, Si-hong, Suwon-si, Gyeonggi-do (KR)
(74) Representative: Robinson, Ian Michael

(57) **Abstract**

A method for automatically setting configurations of a display apparatus (110) according to audio/visual (AV) device (120-140) information or program information, and an apparatus applying the method are provided. The method includes checking device information of an active audio/visual (AV) device (120-140), reading configuration setting values corresponding to the device information from a memory, and changing configurations of a display apparatus (110) according to the configuration setting values. As a result, display configurations are changed to optimum conditions automatically, according to the types of external AV devices connected.

## Description

### BACKGROUND OF THE INVENTION

### 1. Field of the Invention

Apparatuses and methods consistent with the present invention relate to broadcast receiving apparatus and a method for setting configurations thereof, and more particularly, to automatically setting configurations according to external device or program information.

### 2. Description of the Related Art

Television (TV) is one type of broadcast receiving apparatus. TV operates in connection with a variety of external devices.

Meanwhile, TV operates according to configurations either set at the factory, or set by a user after purchase.

However, each external device has its own characteristics. For example, a (Digital Versatile Disc) DVD player from A company may produce a relatively dark image, while a DVD player from a B company may produce a relatively loud sound. In this situation, a user has to decrease brightness if he uses a DVD player of A company, or decrease sound volume if he uses a DVD player of B company.

Such characteristics also vary according to broadcast programs. For example, a user may want to increase sound volume when he changes the program from a soap opera to a music program.

Accordingly, a user is inconvenienced because he has to change the configurations for operating a TV every time he changes an external device.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided a display apparatus and a method as set forth in the appended claims. Other features of the invention will be apparent from the dependent claims, and the description which follows.

The present invention provides a broadcast receiving apparatus and a configuration setting method thereof, which is capable of setting configurations automatically according to device or program information, and enabling a user to set configurations more intuitively.

According to an aspect of the present invention, there is provided a method for setting configurations, including checking device information of an active audio/visual (AV) device, reading configuration setting values corresponding to the device information from a memory, and changing configurations of a display apparatus according to the configuration setting values.

The method may further include adjusting the configuration setting values corresponding to the external AV device, and storing the device information and the adjusted configuration setting values corresponding to the external AV device to the memory.

The adjusting may include splitting a display screen into at least two subscreens, and displaying a before video, corresponding to a video before adjustments to the configuration setting values, on a first subscreen of the at least two subscreens and displaying an after video, corresponding to a video after adjustments to the configuration setting values, on a second subscreen of the at least two subscreens.

The adjusting may include returning to the configuration setting values without the adjustment, in response to a cancel command received from a user.

The changing may include changing to a predefined configuration setting value if there are no corresponding configuration setting values.

The configuration setting values may include one of screen brightness, contrast, color, sharpness, volume, and aspect ratio.

The display apparatus may be a television (TV).

The display apparatus and the AV device may be connected with each other in compliance with High-Definition Multimedia Interface - Consumer Electronics Control (HDMI-CEC) standard.

According to an aspect of the present invention, there is provided a display apparatus, including an interface connected with an audio/visual device for communication, a memory which stores device information and configuration setting values therein, and a control unit which controls receiving of device information from an active external AV device, reading of configuration setting values corresponding to the device information from the memory, and changing of output configurations of the display apparatus according to the configuration setting values.

The control unit may adjust configuration setting values corresponding to the external AV device, and store the device information and the adjusted configuration setting values of the external AV device to the memory.

The control unit may control a TV function block to split a display screen into at least two subscreens, and display a before video, corresponding to a video before adjustments to the configuration setting values, on a first subscreen of the at least two subscreens and display an after video, corresponding to a video after adjustments to the configuration setting values, on a second subscreen of the at least two subscreens.

The control unit may control the TV function block to return to the unadjusted configuration setting values in response to a cancel command from a user.

The control unit may change according to a predefined configuration setting value if there is no corresponding configuration setting values.

The set values may include one of screen brightness, contrast, color, sharpness, volume, and aspect ratio.

The display apparatus and the AV device may be connected with each other in compliance with HDMI-CEC standard.

According to an aspect of the present invention, there is provided a method for setting configurations, including checking program information of an output program, reading out configuration setting values corresponding to the program information from a memory, and changing output configurations of a display according to the configuration setting values.

The method may further include adjusting the configuration setting values of the program, and storing the program information and the adjusted configuration setting values to the memory.

The adjusting may include splitting a display screen into at least two subscreens, and displaying a before video, corresponding to a video before adjustments to the configuration setting values, on a first subscreen of the at least two subscreens and displaying an after video, corresponding to a video after adjustments to the configuration setting values, on a second subscreen of the at least two subscreens.

According to an aspect of the present invention, there is provided a display apparatus, including a memory which stores program information and configuration setting values, and a control unit which controls checking of program information of an output program, reading of configuration setting values corresponding to the program information from a memory, and changing output configurations of a display apparatus according to the configuration setting values.

The control unit may adjust the configuration setting values of the program and store the program information and the adjusted configuration setting values to the memory.

The control unit may split a display screen into at least two subscreens, and display a before video, corresponding to a video before adjustments to the configuration setting values, on a first subscreen of the at least two subscreens and display an after video, corresponding to a video after adjustments to the configuration setting values, on a second subscreen of the at least two subscreens.

According to an aspect of the present invention, there is provided a display apparatus, including an interface connected with an audio/visual (AV) device for communication, a memory which stores device information and configuration setting values, a switching unit which changes a video output path, and a control unit which controls receiving of device information of an active external AV device through the interface, reading of configuration setting values corresponding to the device information from the memory, and changing of the video output path according to the configuration setting values.

The video output path may include a first path that includes a video quality compensation process, and a second path that excludes the video quality compensation process. The control unit may change the video output path to first or second path according to the configuration setting values.

The external AV device may include a game player, and the control unit may change the video output path to the second path.

### BRIEF DESCRIPTION OF THE DRAWINGS

The above and other aspects of the present invention will be more apparent from the following detailed description of exemplary embodiments with reference to the accompanying drawings, in which:
FIG. 1 is a view illustrating a TV and an audio/visual (AV) device according to an exemplary embodiment of the present invention;
FIG. 2 is a detailed block diagram of the TV illustrated in FIG. 1;
FIGS. 3A and 3B are views explaining configuration set values;
FIG. 4 is a flowchart explaining the operation of the TV of FIG. 2 according to an exemplary embodiment of the present invention;
FIG. 5 is a flowchart explaining the operation of the TV of FIG. 2 according to another exemplary embodiment of the present invention;
FIGS. 6A and 6B are views explaining a method for changing configurations according to another exemplary embodiment of the present invention;
FIG. 7 is a block diagram of a display apparatus according to another exemplary embodiment of the present invention;
FIG. 8 is a flowchart explaining the process of changing output configurations according to device information of an external audio/visual (AV) device;
FIG. 9 is a block diagram of a display apparatus according to another exemplary embodiment of the present invention;
FIG. 10 is a flowchart explaining the process of changing output configurations according to program information;
FIG. 11 is a block diagram of a display apparatus connected with a game player device according to another exemplary embodiment of the present invention; and
FIG. 12 is a flowchart explaining the process of changing an image output path upon connecting to a game player device, according to yet another exemplary embodiment of the present invention.
   Throughout the drawings, the same drawing reference numerals will be understood to refer to the same elements, features, and structures.

### DETAILED DESCRIPTION OF EXEMPLARY EMBODIMENTS

The subject matter defined in the description such as a detailed construction and elements are provided to assist in a comprehensive understanding of exemplary embodiments of the invention. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

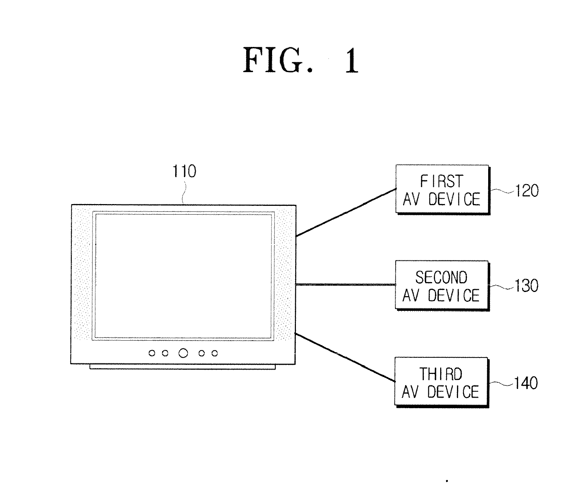

FIG. 1 illustrates an audio/visual (AV) system according to an exemplary embodiment of the present invention.

Referring to FIG. 1, an AV system may include a TV 110, a first AV device 120, a second AV device 130, and a third AV device 140, with all the devices being connected for mutual communication.

The first to third AV devices 120, 130, 140 provide the TV 110 with a broadcast program through a cable that conforms to the HDMI-CEC interface standard. In this situation, the first AV device 120 is connected with the TV 110 as an external input 1, the second AV device 130 is connected as an external input 2, and a third AV device 140 is connected as an external input 3. Accordingly, a user determines an output source for the TV 110 by selecting one from among the external inputs 1 to 3.

For example, if a user selects external input 1 through a front manipulation button or a remote controller (not illustrated), the first AV device 120 is the active source to provide the TV 110 with video and sound to output. If the user selects external input 2, the second AV device 130 is the active source to provide the TV 110 with video and sound to output. Likewise, the TV 110 will output video and sound provide from the third AV device 140 if external input 3 is selected.

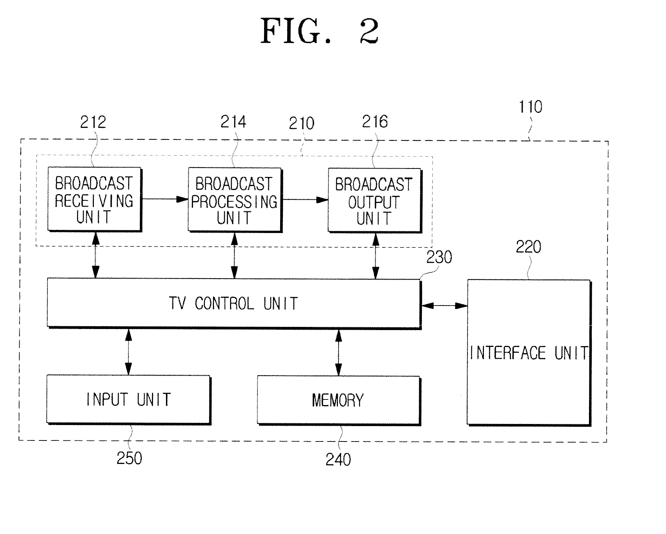

FIG. 2 is a detailed block diagram of the TV 110 illustrated in FIG. 1.

The TV 110 according to an exemplary embodiment of the present invention may include a function block 210, an interface unit 220, a TV control unit 230, a memory 240, and an input unit 250.

The function block 210 performs functions such as output and other additional functions under the control of the TV control unit 230 which will be explained in detail below. The function block 210 may include a broadcast receiving unit 212, a broadcast processing unit 214, and a broadcast output unit 216.

The broadcast receiving unit 212 receives a broadcast program from the first, second and third AV devices 120, 130, 140 and decodes the received program.

The broadcast processing unit 214 performs video signal processing of a broadcast program received at the broadcast receiving unit 212 or an image coming in through the interface unit 220 through video decoding, scaling, brightness adjustment, sharpness adjustment, or contrast adjustment, and also performs audio signal processing such as audio decoding, left/right balance adjustment, stereo setting, or equalizer adjustment.

The broadcast output unit 216 displays an image output from the broadcast processing unit 214 on a video output element such as a display, while outputting an audio through an audio output element such as a speaker.

The interface unit 220 is connected to the external first, second and third AV devices 120, 130, 140 for communication. The input unit 250 receives an externally input user selection through a front manipulation button or a remote controller (not illustrated), or receives a command for other broadcast manipulations.

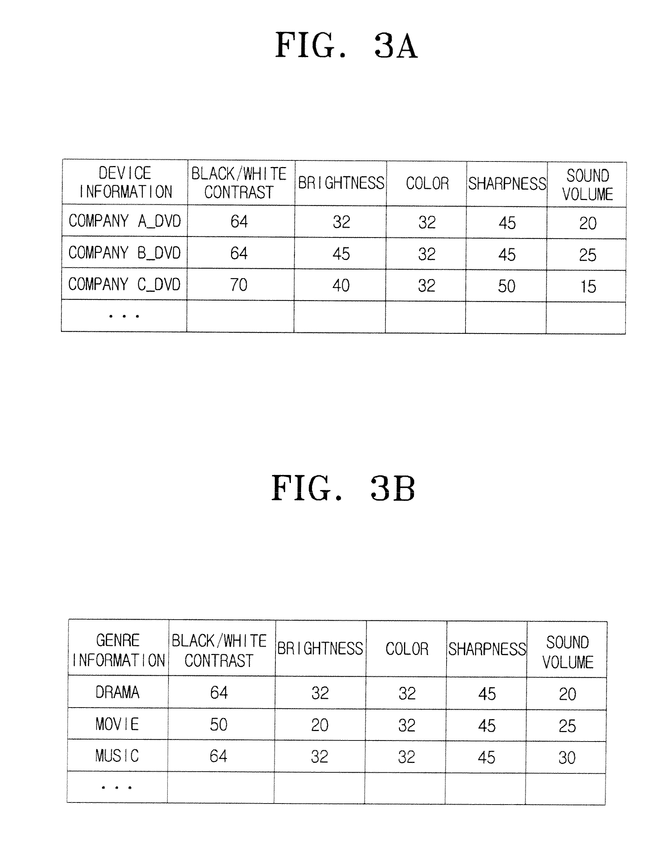

The memory unit 240 stores TV configuration set values. The configuration set values may vary by device model, or even by broadcast program genre. FIGS. 3A and 3B tabulated form of configuration set values according to the device models and program genre, which are stored at the memory unit 240.

Referring to FIGS. 3A and 3B, the configuration set values may include adjustments of black/white contrast, brightness, color, sharpness, and volume.

Referring back to FIG. 2, the TV control unit 230 controls the operation of the function block 210, including reception at the broadcast receiving unit 212, processing at the broadcast processing unit 214, and outputting at the broadcast output unit 216.

Under the control of the TV control unit 230, the configurations for operation of the function block 210, such as reception at the broadcast receiving unit 212, processing at the broadcast processing unit 214, and outputting at the broadcast output unit 216, are set according to the configuration set values stored at the memory 240.

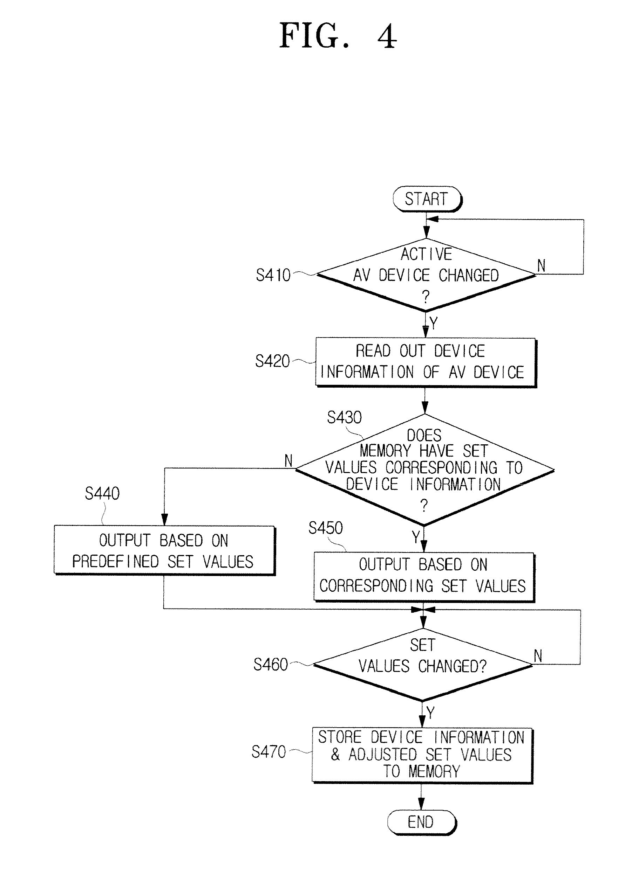

The control operation of the TV control unit 230 will be explained below in greater detail with reference to FIG. 4.

FIG. 4 is a flowchart provided to explain a method for setting configurations of a TV according to an AV device according to an exemplary embodiment of the present invention.

At operation S410, the TV control unit 230 determines whether an active source has changed.

It is determined that an active source has changed, if an externally connected AV device is attempting an operation, or if video and audio sources being received at the TV have changed. In specific, the active source is determined to have changed, if a user newly connects external devices such as DVD player, or selects previously connected AV devices such as DVD player as an external input using a remote controller or a front button.

Referring to FIG. 1, and based on an example in which the first AV device 120 is connected to external input 1, the second AV device 130 is connected to external input 2, and the third AV Device 140 is connected to external input 3, the first AV device 120 is the active source if a user selects external input 1 upon turning on TV.

Referring back to FIG. 4, at operation S420, the TV control unit 230 reads out device information of the first AV device 120, that is, the active AV device.

Reading out device information may be implemented in a variety of manners, and one of these methods will be explained below as an example.

The TV control unit 230 may first extract manufacture information and device model of the first AV device 120 through the interface unit 220, and then acquire device information by combining the extracted information. For example, if manufacturer A of the first AV device 120 is company A, and if the first AV device is a DVD player, the device information of the first AV device 120 may read "company A_DVD."

At operation S430, the TV control unit 230 searches the set values of the memory unit 240 to find the set values corresponding to the device information.

FIG. 3A particularly illustrates set values of the memory unit 240 that correspond to the device information. Referring to FIG. 3A, because the device information "company A_DVD" is written in a device information field at operation S430-Y, the corresponding set values are output at operation S450. Accordingly, the TV control unit 230 controls the operation of the function block 210, including in particular, broadcast reception at the broadcast receiving unit 212, processing at the broadcast processing unit 214, and outputting at the broadcast output unit 216. As a result, black/white contrast is adjusted to 64, brightness to 32, color to 32, and sharpness to 45, and sound volume is adjusted to 20. The video and audio are then output from the active source accordingly.

If device information read at operation S420 indicates "company D_DVD," this device information is determined to be absent in the memory at operation S430-Y, and accordingly, at operation S440, the TV control unit 230 outputs preset configuration set values and controls operational configuration of the function block 210.

The preset configuration set values may be set at the factory by the manufacturer of TV 110, or set as a user desires.

While video and audio are output, if a user changes video or audio settings through a front manipulation button or a remote controller (not illustrated) at operation S460-Y, at operation S470, such changes related to device information are stored to a memory.

Changing screen settings may implement a generally adopted way in which changed values are directly applied to the current screen, as such adjustments are made regarding factors such as white/black contrast or brightness. However, an exemplary embodiment of the present invention may desirably adopt a method which will be explained in detail below.

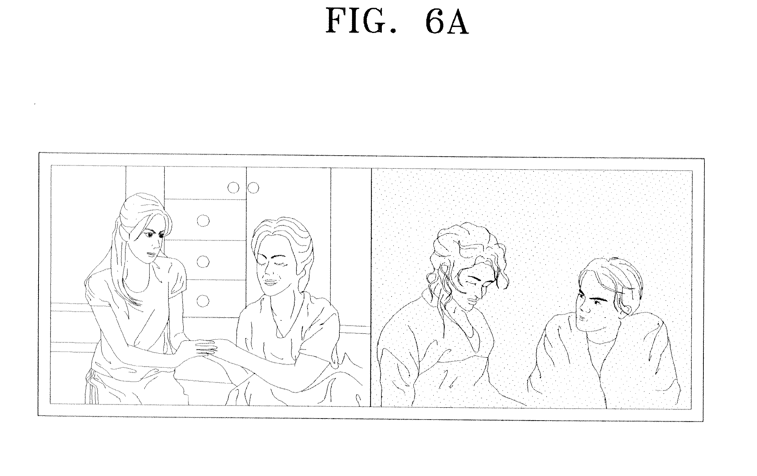

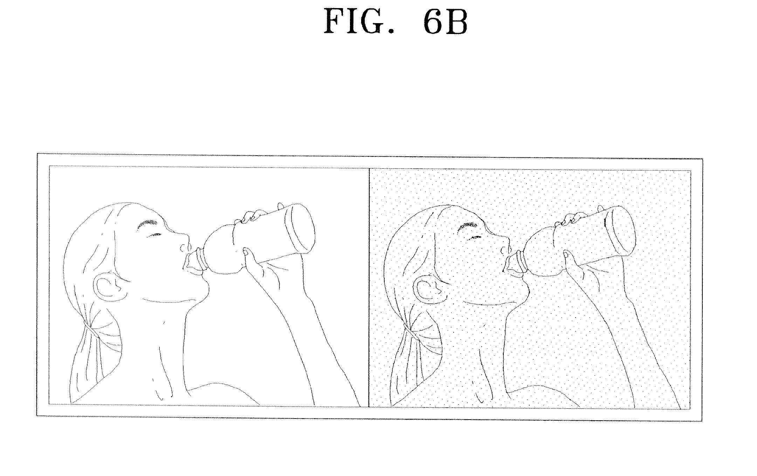

FIGS. 6A and 6B illustrate a method for changing set values according to an exemplary embodiment of the present invention. In particular, FIG. 6A illustrates a screen divided in half, displaying a video from the TV 110 on a left half, and a video from an active external device on a right half. FIG. 6B illustrates a screen which is also divided in half, displaying the same video on both left and right halves, in which a video in the left half is output through the TV 110 and a video in the right half being output through an external device.

In response to a user command to change settings, screen is divided into left and right halves, so that the left half of the screen displays adjustment-applied video and the right half of the screen displays the video before the adjustment. For example, if a user increases brightness by 10 degrees as he feels video is too dark, the TV control unit 230 controls the function block 210 to increase brightness 10 and output a resultant video. At the same time, the TV control unit 230 sends out a control signal to the active external device through the interface unit 220 to decrease the brightness by 10 degrees and output a resultant video. As a result, the left half of the screen outputs a video as adjusted by a user, and the right half outputs a video before the adjustment.

As doing as above, a user can recognize the differences between videos before and after adjustments easily, and thus can adjust screen settings in a more intuitive and easier way.

The user may return to the previous video, if he does not like the video applying the user-setting adjustments.

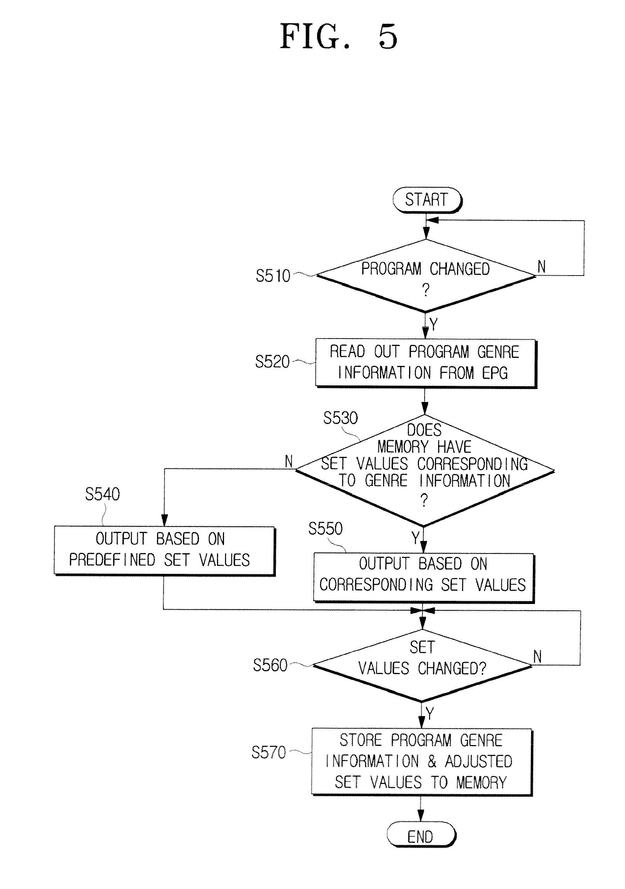

FIG. 5 is a flowchart provided to explain a method for setting configurations of TV according to program information according to an exemplary embodiment of the present invention.

At operation S510, the TV control unit 230 determines whether a program has changed.

It is determined that a program has changed if different video or audio is received at a TV. For example, a program may be determined to have changed, if a user has just turned on TV or changed channel.

At operation S520, the TV control unit 230 reads out genre information of a changed program.

Reading the genre information may be implemented in a variety of methods, but genre information may desirably be read through an electronic program guide (EPG).

At operation S530, the TV control unit 230 searches the memory unit 240 for set values that correspond to the genre information.

FIG. 3B tabulates configuration set values stored to the memory unit 240 in connection with the genre information.

For example, if a newly input program has the genre of soap opera, at operation S530-Y, it is determined that soap opera genre information exists in the genre information field, and at operation S550, corresponding configuration set value is output. In detail, the TV control unit 230 controls the configurations for operation of the function block 210, including the reception of the broadcast receiving unit 212, processing of the broadcast processing unit 214, and outputting of the broadcast output unit 216 so that an output from an active source has a video having black/white contrast of 64, brightness of 32, color of 32, and sharpness of 45, and an audio has sound volume of 20.

If genre information read at operation S520 indicates "sports," at operation S530-Y, because the "sports" is determined to be absent in the memory, at operation S540, the TV control unit 230 outputs preset configuration set values and controls operational configurations of the function block 210.

The preset configuration set values may be set at the factory by a manufacturer of TV 110, or set by a user as he desires.

At operation S560-Y, while video and audio are output, if a user changes video or audio settings through a front manipulation button or a remote controller (not illustrated), at operation 5570, such changes are stored to the memory.

The process in which the TV 110 automatically sets set values according to device or program information, and stores the changed set values are explained above with reference to a few exemplary embodiments of the present invention.

While updated screen set values are automatically stored to a memory upon being changed according to the above exemplary embodiments of the present invention, alternatively, the updated set values may controlled to be stored to the memory only upon receiving an approval from a user.

Furthermore, while the configuration set values implement black/white contrast, brightness, color, sharpness and sound volume, these are used only for the exemplary purpose and should not be construed as limiting. The technical concept of the present invention may well be applied to when part of the above configuration set values is used, or when other set values such as aspect ratio, language, producing country are additionally used.

Furthermore, while the exemplary embodiment explained above describes that the configuration set values are categorized by program genre, this is only for the purpose of convenient explanation. In an alternative, each broadcast program may have configuration set value, or configuration set values may apply differently according to attributes other than program genre.

Furthermore, display apparatuses other than the TV exemplified above may also be applied, if the display apparatuses can display video thereon. These may include monitor, personal multimedia player (PMP), or the like.

While a DVD player was embodied as a device to provide audio and video information to TV, this is one of examples and therefore, should not be understood as limiting. The technical concept of the present invention may equally be applied to cases where other types of AV devices, such as game player or settop box, are connected.

Furthermore, while the TV and AV devices are connected according to HDMI-CEC standard, this is one of examples, and other alternatives are possible. For example, the TV and AV device may be connected through an interface which is capable of transmitting control signals.

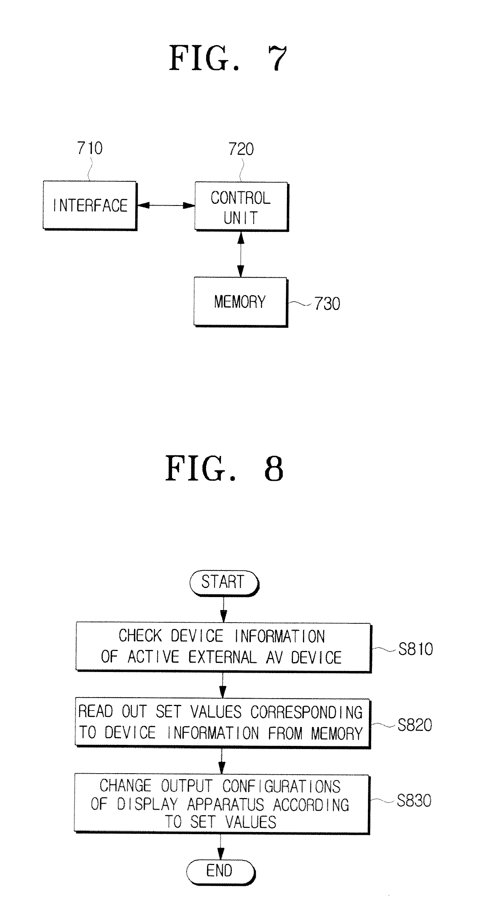

Other exemplary embodiments of the present invention will be explained below with reference to FIGS. 7, 8, 9 and 10.

Referring to FIG. 7, the display apparatus includes an interface 710, a memory 730, and a control unit 720.

The interface 710 is connected with an AV device for communication. The memory 730 stores device information and set values. The control unit 720 controls reception of device information from an external active AV device, reading set values corresponding to the device information from the memory 730, and changing output configurations of the display apparatus according to the read set values.

According to a method for setting configurations exemplified in FIG. 8, at operation S810, a display apparatus checks device information of an external active AV device. At operation S820, the display apparatus reads out set values corresponding to the device information from the memory 730, and at operation S830, changes output configurations according to the set values.

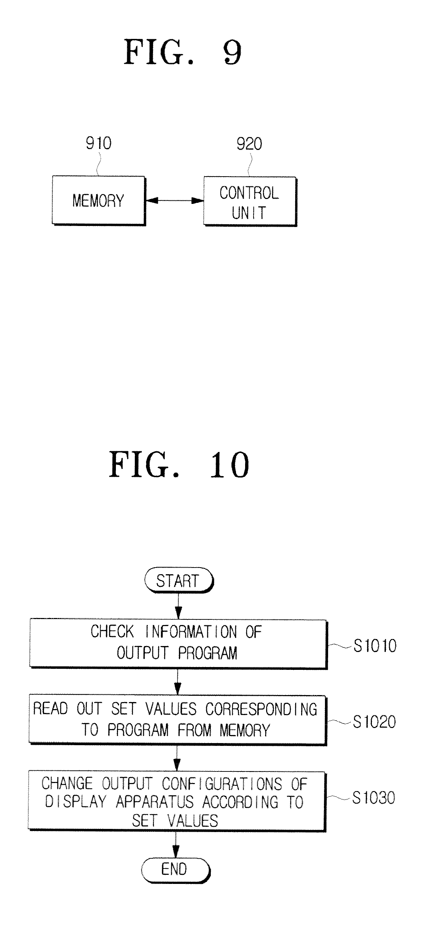

Referring to FIG. 9, the display apparatus according to another exemplary embodiment of the present invention includes a memory 910 and a control unit 920.

The memory 910 stores program information and set values. The control unit 920 controls checking of program information of a program being output, reading of set values corresponding to program information from the memory 910, and changing of output configurations of the display apparatus according to the set values.

According to a method for setting configurations exemplified in FIG. 10, at operation S1010, a display apparatus checks program information of a program being output. At operation S1020, the display apparatus reads out set values corresponding to the program information from the memory 910, and at operation S1030, changes output configurations of the display apparatus according to the set values.

As an alternative, configurations may be set automatically, according to device or program information.

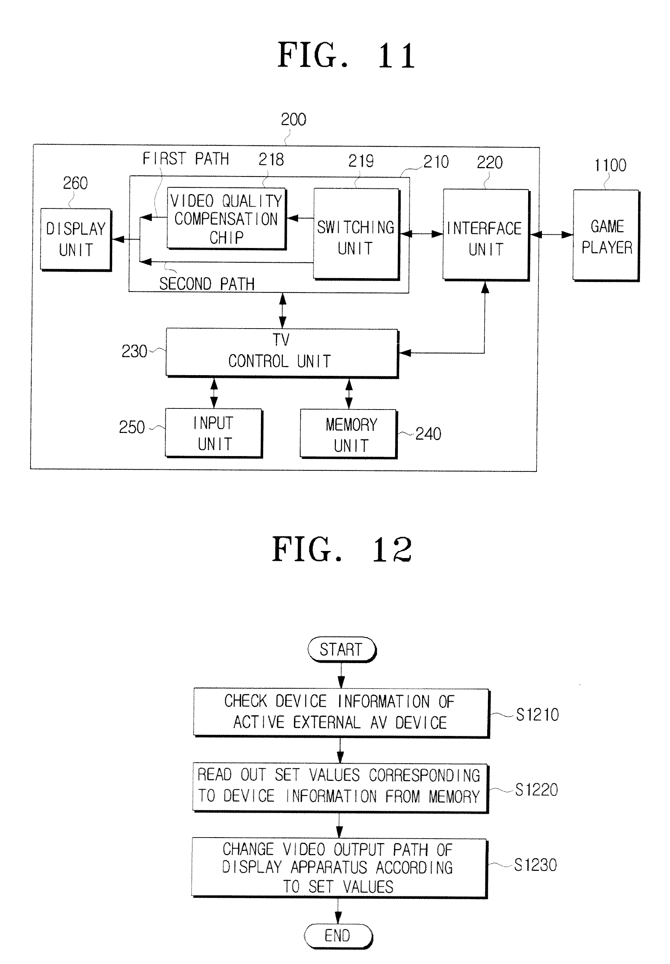

Referring to FIGS. 11 and 12, an example where a game player is connected with a display apparatus will be explained below.

FIG. 11 is a block diagram of a display apparatus which is connected with a game player 1100 according to another exemplary embodiment of the present invention. Referring to FIG. 11, the game player 1100 is connected with a TV 110 employed as a display apparatus.

The structure of the TV 110 will not be explained below for the sake of brevity, as it is explained above in the previous embodiments. The display unit 260 displays a video output from the function block 210 on a screen.

The switching unit 219 switches a video signal input to the interface unit 220 so that the signal is transmitted to first or second path.

The function block 210 includes a video quality compensation chip 218 which improves video quality through the adjustments of color, brightness or the like. However, the video quality compensation chip 218 takes somewhat longer period of time and causes delays in the output of video and subsequent failure of synchronization between video and audio.

Considering that the video of the game player 1100 is fast changing, the game player 1100 in particular, would be affected by the delay of image output severely. However, users generally do not demand high video quality for a game player.

Accordingly, in one desirably implemented, the game player 1100 may not adopt the video quality compensation chip 218 to avoid the delay of video output.

For example, the TV 110 may output video through the first path that includes the video quality compensation chip 218 to display video from AV devices except a game player 1100. The TV 110 may then output video through the second path that excludes the video quality compensation chip 218 to display video from the game player 1100.

In one implementation, a "game mode" may be set and stored in the memory 240 in association with a connection with the game player 1100, to thus cause the second path to be selected as a path to output video.

While the game player 1100 is described as an example of an external AV device in the exemplary embodiment explained above, other AV devices may equally be implemented.

Furthermore, while it is determined whether a video output path includes or excludes the video quality compensation chip 218 in the exemplary embodiment explained above, one will understand that other video output paths are also possible.

FIG. 12 is a flowchart a flowchart provided to explain the process of changing an image output path upon connecting to a game player device, according to yet another exemplary embodiment of the present invention.

Referring to FIG. 12, at operation S 1210, the display apparatus checks device information of an active external A/V device. For example, the TV control unit 230 may check whether or not the active external device is the game player 1100.

At operation S1220, the display apparatus reads out set values that correspond to the device information. For example, the TV control unit 230 may read out "game mode" as a set value that corresponds to the game player 1100. The set value of "game mode" may include the information that indicates that the second path is taken as a path to output video.

At operation 51230, the display apparatus changes video output path according to the set value. For example, the TV control unit 230 may control the switching unit 219 to change the video output path to the second path according to the set value of "game mode." As a result, video signal is output to the display unit 260 through the second path.

As explained above with reference to a few exemplary embodiments of the present invention, configuration set values are set automatically, according to device or program information. As a result, a user of a broadcast receiving apparatus is freed from inconvenience of having to find and set the configurations suitable for an AV device or a program by himself. Also in changing the configuration set values, the user is enabled to compare the screen before and after the configurations change, and therefore, more intuitive manipulation is provided in changing or canceling the settings.

Furthermore, delay of video output in a game play mode can be prevented, because the video signal is sent directly, instead of being transmitted via a video quality compensation chip.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for setting configurations, comprising:
checking device information of an audio/visual (AV) device (120-140);
reading configuration setting values corresponding to the device information from a memory; and
changing configurations of a display apparatus (110) based on the configuration setting values.

2. The method of claim 1, further comprising:
adjusting the configuration setting values corresponding to the AV device; and
storing the device information and the adjusted configuration setting values corresponding to the AV device to the memory.

3. The method of claim 2, wherein the adjusting the configuration setting values comprises:
splitting a display screen into at least two subscreens; and
displaying a before video, corresponding to a video before adjustments to the configuration setting values, on a first subscreen of the at least two subscreens and displaying an after video, corresponding to a video after adjustments to the configuration setting values, on a second subscreen of the at least two subscreens.

4. The method of claim 3, wherein the adjusting the configuration setting values comprises returning to the configuration setting values without the adjustment, in response to a cancel command received from a user.

5. The method of any preceding claim, wherein the changing configurations of a display apparatus (110) comprises changing configurations based on a predefined configuration setting value if there are no configuration setting values corresponding to the read device information.

6. The method of any preceding claim, wherein the configuration setting values comprise one of screen brightness, contrast, color, sharpness, volume, and aspect ratio.

7. The method of any preceding claim, wherein the display apparatus (110) is a television (TV).

8. The method of any preceding claim, wherein the display apparatus (110) and the AV device are connected with each other in compliance with High-Definition Multimedia Interface - Consumer Electronics Control (HDMI-CEC) standard.

9. A display apparatus having an interface connected with an audio/visual (AV) device (120-140) for communication, the display apparatus (110) comprising:
a memory (240) which stores device information and configuration setting values therein; and
a control unit (230) which receives device information from an AV device, reads configuration setting values corresponding to the device information from the memory, and changes output configurations of the display apparatus (110) according to the configuration setting values.

10. The display apparatus of claim 9, wherein the control unit adjusts configuration setting values corresponding to the AV device, and stores the device information and the adjusted configuration setting values of the external AV device to the memory.

11. The display apparatus of claim 10, wherein the control unit splits a display screen into at least two subscreens, and displays a before video, corresponding to a video before adjustments to the configuration setting values, on a first subscreen of the at least two subscreens and displays an after video, corresponding to a video after adjustments to the configuration setting values, on a second subscreen of the at least two subscreens.

12. The display apparatus of claim 11, wherein the control unit controls the display apparatus (110) to return to the unadjusted configuration setting values in response to a cancel command from a user.

13. The display apparatus of any of claims 9 to 12, wherein the control unit changes output configurations according to a predefined configuration setting value if there are no configuration setting values corresponding to the device information.

14. The display apparatus of any of claims 9 to 13, wherein the configuration setting values comprise one of screen brightness, contrast, color, sharpness, volume, and aspect ratio.

15. The display apparatus of any of claims 9 to 14, wherein the display apparatus (110) and the AV device are connected with each other in compliance with High-Definition Multimedia Interface - Consumer Electronics Control (HDMI-CEC) standard.

16. A method for setting configurations, comprising:
checking program information of a program;
reading out configuration setting values corresponding to the program information from a memory; and
changing output configurations of a display apparatus (110) based on the configuration setting values.

17. The method of claim 16, further comprising:
adjusting the configuration setting values of the program; and
storing the program information and the adjusted configuration setting values to the memory.

18. The method of claim 17, wherein the adjusting the configurations setting values comprises:
splitting a display screen into at least two subscreens; and
displaying a before video, corresponding to a video before adjustments to the configuration setting values, on a first subscreen of the at least two subscreens and displaying an after video, corresponding to a video after adjustments to the configuration setting values, on a second subscreen of the at least two subscreens.

19. A display apparatus, comprising:
a memory which stores program information and configuration setting values; and
a control unit which checks program information of a program, reads configuration setting values corresponding to the checked program information from a memory, and changes output configurations of a display apparatus (110) according to the configuration setting values.

20. The display apparatus of claim 19, wherein the control unit adjusts the configuration setting values of the program and stores the program information and the adjusted configuration setting values to the memory.

21. The display apparatus of claim 19, wherein the control unit splits a display screen into at least two subscreens, and displays a before video, corresponding to a video before adjustments to the configuration setting values, on a first subscreen of the at least two subscreens and displays an after video, corresponding to a video after adjustments to the configuration setting values, on a second subscreen of the at least two subscreens.

22. A display apparatus having an interface connected with an audio/visual (AV) device (120-140) for communication, the apparatus comprising:
a memory which stores device information and configuration setting values;
a switching unit which changes a video output path; and
a control unit which receives device information of the AV device through the interface, reads configuration setting values corresponding to the device information from the memory, and changes of the video output path according to the configuration setting values.

23. The display apparatus of claim 22, wherein the video output path comprises a first path that includes a video quality compensation process, and a second path that excludes the video quality compensation process,
wherein the control unit changes the video output path to first or second path according to the configuration setting values.

24. The display apparatus of claim 23, wherein the external AV device comprises a game player, and the control unit changes the video output path to the second path.
